# DEMANDE DE BREVET EUROPEEN

(11) **EP 2 136 097 A1**
(43) Date de publication de la demande: **23.12.2009**
(21) Numéro de dépôt: 09161202.8
(22) Date de dépôt: 27.05.2009
(51) Int. Cl.: F16D 13/64

(54) **Dispositif de friction bi-disque pour embrayage, notamment de véhicule automobile**

(30) Priorité: 16.06.2008 FR 0853955
(71) Demandeur: Valeo Embrayages, 80009 Amiens (FR)
(72) Inventeur: Boero, Bruno, 14100 Asti (IT); Villata, Gino, 14021 Buttigliera d'Asti (IT)

(57) **Abrégé**

Le dispositif (10) de friction comporte deux garnitures de friction (18, 20) et au moins deux supports (14, 16) de ces garnitures de friction (18, 20). Chaque support (14, 16) est en tôle et a une forme générale de révolution autour d'un axe de révolution (X) et comporte au moins une partie (22) déformable élastiquement axialement. Les parties déformables (22) des deux supports (14, 16) comportent des surfaces (38, 40) en regard l'une de l'autre, telles que chacune de ces surfaces (38, 40) présente au moins un décrochement axial. Les surfaces (38, 40) en regard sont jointives et parallèles.

## Description

La présente invention concerne les dispositifs de friction pour embrayage, notamment de véhicule automobile.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe mené est couplé à un arbre de boîte de vitesses.

L'embrayage comporte au moins un mécanisme entraîné en rotation par l'organe menant, ce mécanisme étant fixé sur un volant d'inertie solidaire du vilebrequin. Le mécanisme comprend un couvercle, un diaphragme et un plateau de pression tous liés en rotation avec l'organe menant.

L'embrayage comporte en outre un dispositif de friction, comportant un disque de friction, solidaire en rotation avec l'organe mené.

Afin de coupler les organes rotatifs menant et mené, le diaphragme enserre le disque de friction entre le plateau de pression et un plateau de réaction solidaire en rotation du couvercle. En général, le plateau de réaction est formé par le volant d'inertie.

Le serrage du disque de friction entre le plateau de pression et le plateau de réaction est commandé par le conducteur du véhicule au moyen d'une pédale de commande déplaçable entre une position de débrayage, dans laquelle le disque de friction n'est pas enserré, et une position d'embrayage, dans laquelle le disque de friction est enserré.

On notera qu'il se créent parfois des défauts de parallélisme et d'alignement entre les plateaux de pression et de réaction, par exemple lors d'une élévation de la température des plateaux qui entraîne des déformations de ces plateaux. Ces défauts de parallélisme et d'alignement peuvent également avoir pour cause des dispersions de cotes apparaissant lors de l'usinage ou de l'assemblage des éléments constituant le dispositif.

Afin de remédier à ces défauts de parallélisme et d'alignement, on connaît déjà dans l'état de la technique, notamment d'après DE 102 27 319, un dispositif de friction comportant deux supports de garnitures de friction. Chaque support est en tôle et a une forme générale de révolution autour d'un axe de révolution.

En outre, chaque support comporte au moins une partie déformable élastiquement axialement.

Chaque support de garniture décrit dans DE 102 27 319 comporte deux lignes de pliage coaxiales délimitant un décrochement du support reliant entre elles une partie périphérique du support, portant la garniture, et une partie centrale du support. Le décrochement et la partie périphérique de chaque support forme la partie du support déformable élastiquement axialement.

Les parties déformables des deux supports sont délimitées par deux surfaces en regard telles que la projection de chaque surface sur l'axe de révolution a une coordonnée évolutive sur cet axe de révolution.

On dit qu'une projection d'une surface sur un axe a une coordonnée évolutive sur cet axe lorsque cette projection ne se réduit pas à un point. La projection sur un axe d'une surface perpendiculaire à cet axe se limite à un point.

Les parties déformables autorisent un débattement axial entre les garnitures de friction, lorsque le disque de friction est enserré entre le plateau de pression et le plateau de réaction. Ce débattement axial est habituellement appelé progressivité.

En cas de défaut de parallélisme entre les plateaux de pression et de réaction, la progressivité permet de garder un effort de serrage du disque de friction réparti de manière sensiblement uniforme sur chacune des garnitures de friction. Cette répartition uniforme de l'effort de serrage est importante pour assurer une bonne durée de vie de l'embrayage.

On notera que le déplacement du plateau de réaction par rapport au plateau de pression étant lié au déplacement de la pédale de commande, la progressivité permet, lors du serrage du disque de friction, une course plus grande de la pédale de commande. En effet, le déplacement axial des garnitures l'une par rapport à l'autre, lors du serrage progressif du disque de pression, entraîne une course supplémentaire de la pédale de commande entre le début et la fin de l'augmentation de l'effort de serrage.

Dans DE 102 27 319, les supports sont disposés symétriquement par rapport à un plan perpendiculaire à leur axe de révolution de façon que leurs parties centrales sont jointives dans ce plan de symétrie et leurs parties périphériques écartées axialement l'une de l'autre.

Dans un dispositif de friction du type décrit dans DE 102 27 319, il convient de limiter autant que possible les vibrations, sources de bruits indésirables.

Les vibrations sont amorties notamment par les frottements entre les supports. Toutefois, lors du débattement axial des garnitures, les frottements entre les supports du dispositif de friction de DE 102 27 319 restent limités si bien que l'amortissement des vibrations reste également limité. En effet, les zones de contact entre les supports ne frottent pas, ou très peu, les unes contre les autres lors de ce débattement axial des garnitures.

L'invention a notamment pour but de remédier à cet inconvénient en fournissant un dispositif de friction capable de réduire les bruits émis et vibrations subies, tout en assurant une progressivité au moins aussi efficace que dans l'état de la technique.

A cet effet, l'invention a pour objet un dispositif de friction pour un embrayage, notamment de véhicule automobile, du type comportant deux garnitures de friction et au moins deux supports de ces garnitures de friction, chaque support étant en tôle et ayant une forme générale de révolution autour d'un axe de révolution et comportant au moins une partie déformable élastiquement axialement, les parties déformables des deux supports comportant des surfaces en regard l'une de l'autre telles que chacune de ces surfaces présente au moins un décrochement axial, dans lequel les surfaces en regard sont jointives et parallèles.

On rappellera que deux surfaces sont parallèles si toute normale à l'une est également une normale à l'autre.

On notera que, les surfaces en regard étant parallèles, les coordonnées des projections de ces deux surfaces sur l'axe de révolution évoluent de façon identique, à la différence des surfaces symétriques décrites dans DE 102 27 319, dont les coordonnées des projections sur un axe de révolution des supports évoluent de façon opposées.

On notera également que, du fait de leurs parties déformables élastiquement axialement, les supports assurent une progressivité satisfaisante. Par exemples, ces supports sont pliés de façon à présenter un décrochement autorisant le débattement axial entre les garnitures de friction.

Les surfaces en regard des supports, jointives et parallèles, forment de relativement vastes surfaces de frottement mutuel susceptibles d'amortir efficacement d'éventuelles vibrations subies par le dispositif de friction.

En outre, on notera qu'un empilement comprenant au moins deux supports tels que définis précédemment a avantageusement une raideur de flexion inférieure à celle d'un support unique d'épaisseur correspondant à la somme des épaisseurs des supports de l'empilement ci-dessus.

De préférence, l'empilement des supports a une épaisseur totale sensiblement identique à un support classique, c'est-à-dire une épaisseur totale d'environ 0.8mm.

Un dispositif de friction selon l'invention peut en outre comporter l'une ou plusieurs des caractéristiques suivantes :
- les supports sont sensiblement identiques,
- chaque partie déformable élastiquement se déforme simultanément axialement et circonférentiellement,
- chaque support comporte plusieurs parties déformables élastiquement réparties circonférentiellement autour d'une partie centrale de ce support, chaque partie déformable étant venue de matière avec la partie centrale,
- chaque partie déformable élastiquement a, avant déformation, une forme générale pliée comportant aux moins deux plis délimitant des sous parties, de préférence planes, au moins une sous partie formant appui pour une garniture de friction,
- au moins une sous partie forme appui pour un élément d'accrochage des deux supports entre eux, par exemple un rivet,
- les deux plis délimitant des sous parties sont sensiblement parallèles,
- chaque garniture de friction est fixée aux supports à l'aide d'au moins un rivet,
- le rivet traverse chaque support de façon à solidariser entre eux les supports en rotation,
- au moins 20%, de préférence au moins 50%, de chaque surface est susceptible de frotter contre l'autre surface lorsque les parties déformables se déforment élastiquement axialement,
- les au moins 20% de chaque surface susceptible de frotter contre l'autre surface comportent le décrochement axial,
- le dispositif de friction comprend au moins trois supports empilés de façon que chaque support comporte au moins une surface jointive et parallèle avec une surface d'un autre support.

L'invention à également pour objet un embrayage pour véhicule automobile, comportant un dispositif tel que défini précédemment.

L'invention sera mieux comprise à la lecture de la description qui va suivre, donnée uniquement à titre d'exemple et faite en se référant aux dessins annexés dans lesquels :
- la figure 1 est une vue partielle de face d'un dispositif de friction selon un exemple de mode de réalisation de l'invention,
- la figure 2 est une vue en coupe circonférentielle selon les flèches II-II du dispositif de la figure 1,
- la figure 3 est un graphique comparant les capacités d'amortissement du dispositif de friction de la figure 1 avec celles d'un dispositif de l'état de la technique.

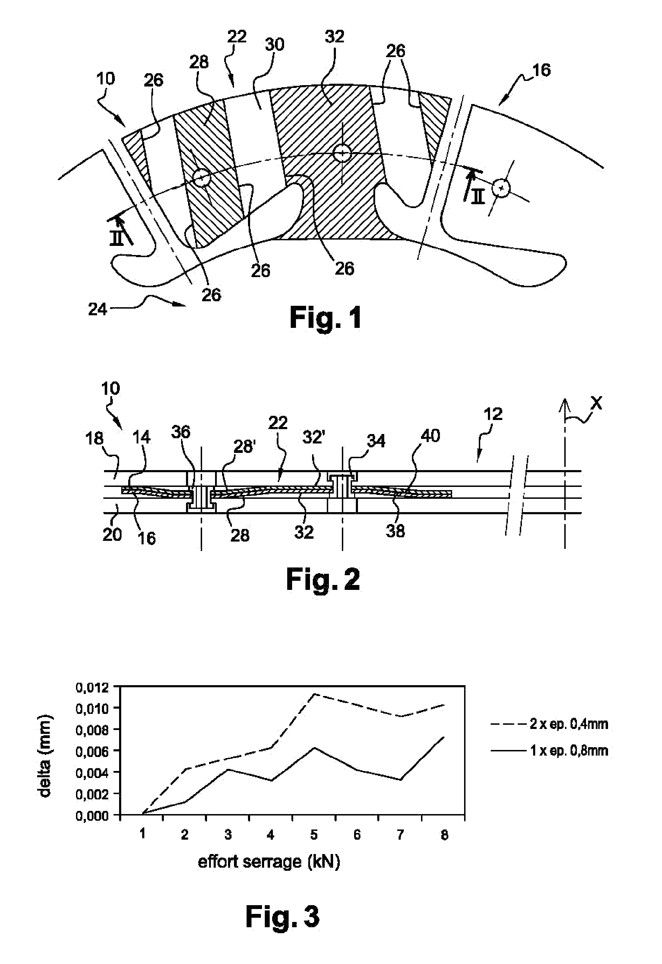

On a représenté sur les figures 1 et 2 un dispositif de friction 10 selon un exemple de mode de réalisation de l'invention, destiné à équiper un embrayage, notamment de véhicule automobile.

De manière classique, le dispositif de friction 10 comporte un amortisseur pour la transmission d'un couple de rotation d'un organe menant, tel qu'un vilebrequin d'un moteur du véhicule automobile, à un arbre mené, tel qu'un arbre d'entrée d'une boîte de vitesses.

A cet effet, cet amortisseur est monté entre un élément rotatif d'entrée, tel qu'un disque de friction 12 susceptible d'être lié en rotation au vilebrequin, et un élément rotatif de sortie, tel qu'un moyeu cylindrique susceptible d'être lié en rotation à l'arbre d'entrée de boîte de vitesses. On notera que les éléments d'entrée et de sortie sont sensiblement coaxiaux.

L'embrayage comporte au moins un mécanisme entraîné en rotation par l'organe menant, ce mécanisme étant fixé sur un volant d'inertie solidaire du vilebrequin. Le mécanisme comprend un couvercle, un diaphragme et un plateau de pression tous liés en rotation avec l'organe menant.

Afin de coupler les organes rotatifs menant et mené, le diaphragme enserre le disque de friction 12 entre le plateau de pression et un plateau de réaction solidaire en rotation du couvercle.

Le disque de friction 12 comporte deux supports 14, 16 de garnitures de friction. Les supports 14, 16 sont en tôle et ont des formes générales de révolution autour d'un axe X. De préférence, les supports 14, 16 sont sensiblement identiques.

Chaque support 14, 16 porte respectivement une garniture de friction 18, 20. Ces garnitures de friction sont sensiblement annulaires et coaxiales.

Afin d'assurer une progressivité entre les garnitures de friction 18, 20, chaque support 14, 16 comporte au moins une partie 22 déformable élastiquement axialement. Par exemple, chaque support 14, 16 comporte plusieurs parties déformables 22 réparties circonférentiellement autour d'une partie centrale 24 de ce support, chaque partie déformable 22 étant venue de matière avec la partie centrale 24.

Chaque partie déformable 22 est conformée pour se déformer simultanément axialement et circonférentiellement. En effet, chaque partie 22 déformable élastiquement a, avant déformation, une forme générale pliée comportant aux moins deux plis 26, de préférence sensiblement parallèles, délimitant des sous parties 28, 30, 32. De préférence, ces sous parties 28, 30, 32 sont planes

Dans chacun des supports 14, 16, au moins une sous partie 32', 28 forme appui pour l'une des garnitures de friction 18, 20, alors qu'une autre sous partie 28', 32 forme appui pour un élément 34, 36 d'accrochage des deux supports 14, 16 entre eux, par exemple un rivet. De préférence, l'autre des garnitures de friction 20, 18 est fixée au supports 16, 14 à l'aide de ce même rivet 34, 36. Ainsi, ce rivet 34, 36 traverse chaque support 14, 16 de façon à solidariser entre eux les supports 14, 16 en rotation.

De préférence, chaque partie déformable 22 comporte six plis 26 de façon à délimiter deux sous-parties d'appui pour la garniture de friction correspondante.

Comme cela est représenté sur la figure 2, les parties déformables 22 des deux supports 14, 16 comportent des surfaces 38, 40 en regard l'une de l'autre, telles que chacune de ces surfaces 38, 40 présente au moins un décrochement axial. En d'autres termes, la projection de chaque surface sur l'axe de révolution X a une coordonnée évolutive sur cet axe de révolution, c'est à dire que cette projection ne se réduit pas à un seul point.

Les surfaces 38, 40 sont jointives et parallèles. Conformément au mode de réalisation représenté, ces surfaces 38, 40 sont jointives sur toute leur étendue.

Ainsi, lorsque les parties déformables 22 se déforment axialement, et circonférentiellement, les surfaces 38, 40 frottent l'une contre l'autre, amortissant ainsi les vibrations subies. De préférence, au moins 20%, généralement au moins 50%, de chaque surface 38, 40 est susceptible de frotter contre l'autre surface 40, 38 lorsque ces parties déformables 22 se déforment élastiquement axialement.

On notera que les au moins 20% de chaque surface susceptible de frotter contre l'autre surface comportent les décrochements axiaux de ces surfaces. En effet, les décrochements axiaux sont les zones de chaque surfaces 38, 40 où le déplacement relatif entre ces surfaces 38, 40, et par conséquent le frottement, est maximal lors de la déformation axiale des parties déformables.

Afin d'illustrer la meilleure capacité d'amortissement des vibrations du dispositif de friction 10 par rapport à celle d'un dispositif de friction de l'état de la technique du type ne comprenant qu'un support de garnitures de frictions, on a comparé les comportements d'un dispositif de l'état de la technique et d'un dispositif selon l'invention. Dans l'exemple suivant, le dispositif de l'état de la technique ne comprend qu'un seul support de 0,8 mm d'épaisseur, et le dispositif selon l'invention comprend deux supports de 0,4 mm d'épaisseur chacun.

On a appliqué aux garnitures de friction de chaque dispositif un effort de serrage donné selon la direction de l'axe X. On a ensuite mesuré un déplacement relatif, dans la direction X, des deux garnitures de friction de chaque dispositif sous l'effet de cet effort de serrage donné, appelé « déplacement en compression ».

On a également mesuré un déplacement relatif, dans la direction X, des deux garnitures de friction de chaque dispositif après annulation de l'effort de serrage précité, appelé « déplacement en ouverture »).

Compte tenu d'un effet d'hystérésis dû aux frottements dans chaque dispositif, on a calculé la valeur absolue « delta » d'une différence entre les déplacement en compression et en ouverture pour chacun de ces dispositifs.

On a rapporté dans le tableau suivant, pour différents efforts de serrage donnés, les déplacement en compression, en ouverture, et leur différence « delta », respectivement pour le dispositif à un support de l'état de la technique et pour le dispositif à deux supports selon l'invention.

| | 1 support d'épaisseur 0,8mm, 8 pales (Etat de la technique) | | | 2 supports d'épaisseur 0,4mm, 8 pales (Invention) | | |
|---|---|---|---|---|---|---|
| effort serrage [ N ] | déplacement compression [ mm ] | déplacement ouverture [ mm ] | delta | déplacement compression [ mm ] | déplacement ouverture [ mm ] | delta |
| 1000 | 0,000 | 0,000 | 0,000 | 0,000 | 0,000 | 0,000 |
| 2000 | 0,014 | 0,013 | 0,001 | 0,015 | 0,011 | 0,004 |
| 3000 | 0,030 | 0,026 | 0,004 | 0,032 | 0,027 | 0,005 |
| 4000 | 0,051 | 0,048 | 0,003 | 0,053 | 0,047 | 0,006 |
| 5000 | 0,074 | 0,068 | 0,006 | 0,082 | 0,071 | 0,011 |
| 6000 | 0,103 | 0,099 | 0,004 | 0,117 | 0,107 | 0,010 |
| 7000 | 0,137 | 0,134 | 0,003 | 0,166 | 0,157 | 0,009 |
| 8000 | 0,196 | 0,189 | 0,007 | 0,245 | 0,235 | 0,010 |

On a représenté sur la figure 3 un graphique tracé en fonction des données du tableau précédent, comportant en abscisse l'effort de serrage, et en ordonnée les valeurs « delta » des deux dispositifs de friction.

II apparaît clairement sur le graphique de cette figure 3 que la courbe correspondant au dispositif selon l'invention (en pointillés sur le graphique) se trouve au dessus de la courbe correspondant au dispositif de l'état de la technique (en trait plein sur le graphique), ce qui signifie que la différence entre les déplacements en compression et en ouverture est plus importante pour le dispositif selon l'invention.

Cette différence de déplacement « delta » étant liée à un effet d'hystérésis, on en déduit que cet effet d'hystérésis est plus important pour le dispositif selon l'invention que pour celui de l'état de la technique. En d'autres termes, les frottements, qui limitent le déplacement en ouverture, sont plus importants dans le dispositif selon l'invention.

Ces frottements permettent une dissipation de l'énergie des vibrations subies par le dispositif. Ainsi, il apparaît clairement que les vibrations sont mieux amorties dans le dispositif selon l'invention que dans un dispositif de l'état de la technique.

On notera que, en moyenne, la différence de déplacement « delta » dans le dispositif selon l'invention est sensiblement égale au double de la différence de déplacement « delta » dans le dispositif de l'état de la technique. Ainsi, la capacité d'amortissement des vibrations par le dispositif de l'invention est très supérieure à celle du dispositif de l'état de la technique, et vaut sensiblement le double.

On notera que l'invention n'est pas limitée au mode de réalisation précédemment décrit.

En effet, en variante, les parties déformables axialement pourraient être conformées pour se déformer radialement plutôt que circonférentiellement.

Conformément à une autre variante, le dispositif pourrait comporter au moins trois supports empilés de façon que chaque support comporte au moins une surface jointive et parallèle avec une surface d'un autre support.

## Revendications

1. Dispositif (10) de friction pour un embrayage, notamment de véhicule automobile, du type comportant deux garnitures de friction (18, 20) et au moins deux supports (14, 16) de ces garnitures de friction (18, 20), chaque support (14, 16) étant en tôle et ayant une forme générale de révolution autour d'un axe de révolution (X) et comportant au moins une partie (22) déformable élastiquement axialement, les parties déformables (22) des deux supports (14, 16) comportant des surfaces (38, 40) en regard l'une de l'autre, telles que chacune de ces surfaces (38, 40) présente au moins un décrochement axial **caractérisé en ce que** les surfaces (38, 40) en regard sont jointives et parallèles.

2. Dispositif de friction (10) selon la revendication 1, dans lequel les supports (14, 16) sont sensiblement identiques.

3. Dispositif de friction (10) selon la revendication 1 ou 2, dans lequel chaque partie déformable élastiquement (22) se déforme simultanément axialement et circonférentiellement.

4. Dispositif de friction (10) selon l'une quelconque des revendications 1 à 3, dans lequel chaque support (14, 16) comporte plusieurs parties déformables élastiquement (22) réparties circonférentiellement autour d'une partie centrale (24) de ce support, chaque partie déformable (22) étant venue de matière avec la partie centrale (24).

5. Dispositif de friction (10) selon l'une quelconque des revendications 1 à 4, dans lequel chaque partie déformable élastiquement (22) a, avant déformation, une forme générale pliée comportant aux moins deux plis (26) délimitant des sous parties(28, 30 ,32, 28', 32'), de préférence planes, au moins une sous partie (28, 32') formant appui pour une garniture de friction (20, 18).

6. Dispositif de friction (10) selon la revendication 5, dans lequel au moins une sous partie (28', 32) forme appui pour un élément d'accrochage (34, 36) des deux supports (14, 16) entre eux, par exemple un rivet.

7. Dispositif de friction (10) selon la revendication 5 ou 6, dans lequel les deux plis (26) délimitant des sous parties (28, 30, 32, 28', 32') sont sensiblement parallèles.

8. Dispositif de friction (10) selon l'une quelconque des revendications précédentes, dans lequel chaque garniture de friction (18, 20) est fixée aux supports à l'aide d'au moins un rivet (34, 36), le rivet (34, 36) traversant de préférence chaque support (14, 16) de façon à solidariser entre eux les supports (14, 16) en rotation.

9. Dispositif de friction (10) selon l'une quelconque des revendications précédentes, dans lequel au moins 20%, de préférence au moins 50%, de chaque surface (38, 40) est susceptible de frotter contre l'autre surface (40, 38) lorsque les parties déformables (22) se déforment élastiquement axialement.

10. Dispositif de friction (10) selon la revendication 9, dans lequel les au moins 20% de chaque surface (38, 40) susceptible de frotter contre l'autre surface (40, 38) comportent le décrochement axial.

11. Dispositif de friction (10) selon l'une quelconque des revendications précédentes, comprenant au moins trois supports empilés de façon que chaque support comporte au moins une surface jointive et parallèle avec une surface d'un autre support.

12. Embrayage pour véhicule automobile, **caractérisé en ce qu'**il comporte un dispositif (10) selon l'une quelconque des revendications précédentes.
